# EUROPÄISCHE PATENTSCHRIFT

(11) **EP 1 269 701 B1**
(45) Veröffentlichungstag und Bekanntmachung des Hinweises auf die Patenterteilung: **10.11.2004**
(21) Anmeldenummer: 01929250.7
(22) Anmeldetag: 21.03.2001
(51) Int. Cl.: H04L 12/66

(54) **VERFAHREN ZUR BEREITSTELLUNG VON TELEFONDIENSTEN ÜBER xDSL ANSCHLUSSLEITUNGEN**
METHOD FOR PROVIDING TELEPHONE SERVICES THROUGH XDSL CONNECTION LINES
PROCEDE DE MISE A DISPOSITION DE SERVICES TELEPHONIQUES VIA DES LIGNES D'ABONNE XDSL

(30) Priorität: 21.03.2000 DE 10013866
(43) Veröffentlichungstag der Anmeldung: 02.01.2003
(73) Patentinhaber: SIEMENS AKTIENGESELLSCHAFT, 80333 München (DE)
(72) Erfinder: RUCKSTUHL, Hanspeter, 82515 Wolfratshausen (DE)
(86) Internationale Anmeldenummer: PCT/DE2001/001084
(87) Internationale Veröffentlichungsnummer: WO 2001/071993

(56) Entgegenhaltungen:
- WO-A-00/11880
- ; THE INTERNATIONAL ENGINEERING CONSORTIUM: "VoDSL" VOICE OVER DIGITAL SUBSCRIBER LINE (VODSL) TUTORIAL, [Disk] 3. August 2000 (2000-08-03), Seiten 1-6, XP002171308 Gefunden im Internet: <URL:http://www.iec.org/tutorials/voice_ds l> [gefunden am 2001-07-06]
- FERNANDO CUERVO, NANCY GREEN, MATT HOLDREGE, LYNDON ONG, CHRISTIAN HUITEMA: "SS7-Internet Interworking - Architectural Framework" INTERNET DRAFT, DRAFT-GREENE-SS7-ARCH-FRAME-00.TXT, [Online] Juli 1998 (1998-07), Seiten 1-9, XP002171309 Gefunden im Internet: <URL:ftp://standards.nortelnetworks.com/me gaco/docs/Expired/> [gefunden am 2001-07-06]
- DENNIS GATENS: "The killer app for IP" TELEPHONY, 12. April 1999 (1999-04-12), Seiten 58-64, XP000100726 Pulsecom, Herdon, VA, USA ISSN: 0040-2656
- GUDAPATI K ET AL: "LOCAL TELEPHONE SERVICE FOR CABLE SUBSCRIBERS USING PACKET SWITCHEDACCESS" ISS. WORLD TELECOMMUNICATIONS CONGRESS. (INTERNATIONAL SWITCHING SYMPOSIUM),CA,TORONTO, PINNACLE GROUP, 21. September 1997 (1997-09-21), Seiten 325-329, XP000704483

## Beschreibung

### 1. Welches technische Problem soll durch die Erfindung gelöst werden?

Alternative Ortsnetzbetreiber (z.B. COLT), welche Endkunden direkt bedienen wollen, müssen neue Zugangstechniken einführen oder die Teilnehmerzugangsleitung vom ehemaligen Monopolisten (z.B. Deutsche Telekom) leasen. Die monatlichen Leasingkosten bewegen sich dabei im Bereich der Teilnehmergrundgebühr des klassischen Telefoniedienstes, so dass der alternative Ortsnetzbetreiber über die geleaste Teilnehmerzugangsleitung Zusatzdienste anbieten muss, um profitabel zu sein.
Diese Zusatzdienste basieren auf der xDSL-Technologie und bestehen nebst dem breitbandigen Internetzugang zunehmend aus Voice_over_DSL (VoDSL). Mit VoDSL wird die breitbandige xDSL-Technologie dazu genutzt, dem Endkunden über eine Anschlussleitung bis zu 16 Teilnehmeranschlüsse für die lukrativen Telefoniedienste (ISDN oder Analog) zur Verfügung zu stellen. Zielgruppe für die VoDSL-Dienste sind primär kleine bis mittlere Unternehmen.

### 2. Wie wurde dieses Problem bisher gelöst?

Generell werden bei VoDSL packetorientierte Verfahren eingesetzt, um über xDSL Leitungen die bekannten Telefoniedienste (ISDN oder Analog) anbieten zu können. Bisher bekannte Verfahren sind:

### I. Broadband Loop Emulation Services (BLES)

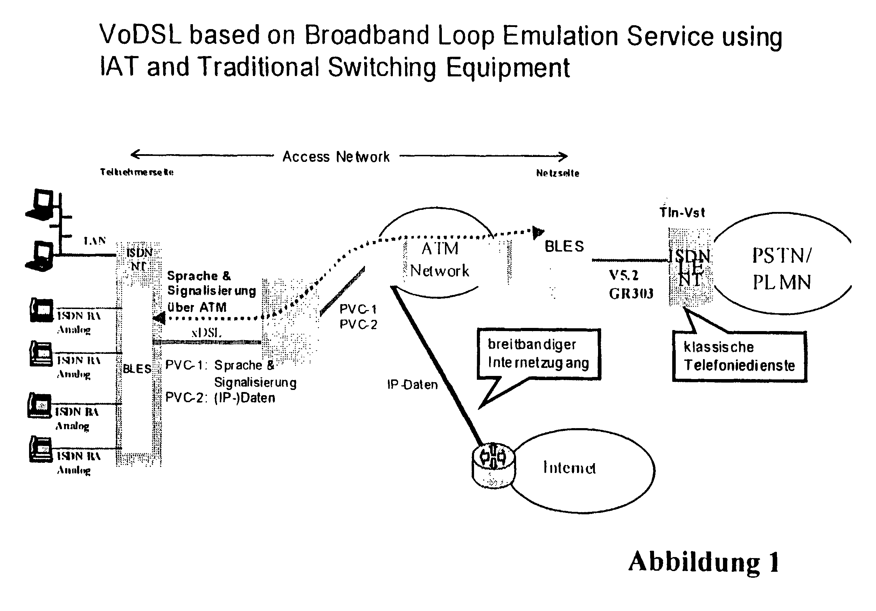

Diese Lösung ist im Abbildung 1 dargestellt. Bei diesem Verfahren werden die Teilnehmersignalisierungsprotokolle (z.B. GR303, V5, ISDN) und der Sprachkanal von einer klassischen Teilnehmervermittlungsstelle (Tln-Vst) transparent über das packetorientierte Access Netz zum Leitungsabschluss im Integrated Access Device (IAD) beim Endkunden geführt. Als Transportprotokoll für die Übertragung von Signalisierung und Sprache kommt meist ATM/AAL2 zum Einsatz. Andere Transportprotokolle, z.B. FR oder IP, wären auch denkbar.

Nachteile bei diesem Lösungsansatz sind u.a.
- aufwändiges, fehleranfälliges Betreiben, weil der Teilnehmer zweimal - einmal in der Tln-Vst und nochmals im AN - einzurichten ist
- Beschränkung auf Sprachdienste, d.h. trotz Verwendung eines packetorientierten Netzes nicht auf Multi-Media erweiterbar.

Vorteile bei diesem Lösungsverfahren sind u.a.
- Die Sicherstellung der klassischen Telefoniedienste und Teilnehmerabschlüsse, klassische Endgeräte können uneingeschränkt wiederverwendet werden
- Die für den Telefoniediest erforderliche Qualtiy of Service (QoS) wird durch die Verwendung eines dedizierten ATM-PVC im Access Netz und TDM in der Tln-Vst sichergestellt

### II. Voice over Multi-Service Data Networks (VoMSDN)

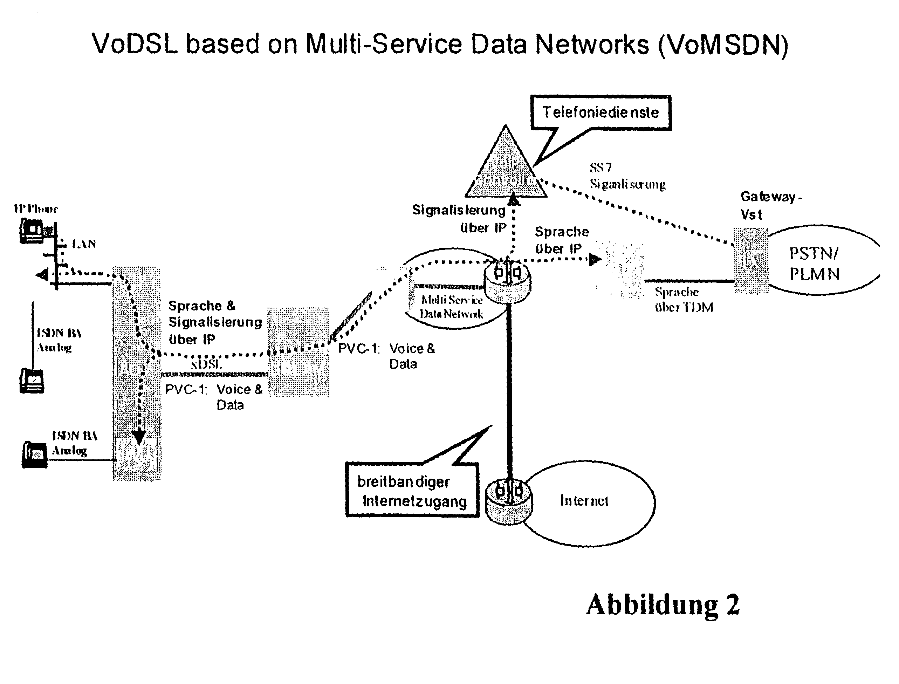

Diese Lösung ist im Abbildung 2 dargestellt. Dieses Verfahren basiert auf VoIP und nutzt die entsprechenden Protokolle, z.B. H323, SIP, MGCP. Der Zugang zum traditionellen PSTN erfolgt nicht mehr über eine Tln-Vst, sondern über eine Transit-Vst. VoIP Controller und Media Gateway übernehmen dabei die Interworkingfunktion bzgl. Signalisierung (H.323, SIP <-> ISUP) und Nutzkanal (VoIP <-> TDM).

Nachteile bei diesem Lösungsverfahren sind u.a.
- Die für den Telefoniediest erforderliche Qualtiy of Service (QoS) kann nicht sichergestellt werden, da Sprach-, Signalisierungs- und Datenpakete über die selbe ATM-Verbindung transportiert werden
- Der angebotene VoIP Telefoniedienst ist nicht identisch mit dem klassischen Telefoniedienst - klassische Endgeräte können nur bedingt wiederverwendet werden

Vorteile bei diesem Lösungsverfahren sind u.a.
- Die Möglichkeit, beim Endkunden das LANs als Verteilnetz auch für die Telefoniedienste zu nutzen
- Die Erweiterbarkeit auf Multi-Media-Dienste, insbesondere bei der Verwendung von H.323 oder SIP

### 3. In welcher Weise löst die Erfindung das angegebene technische Problem?

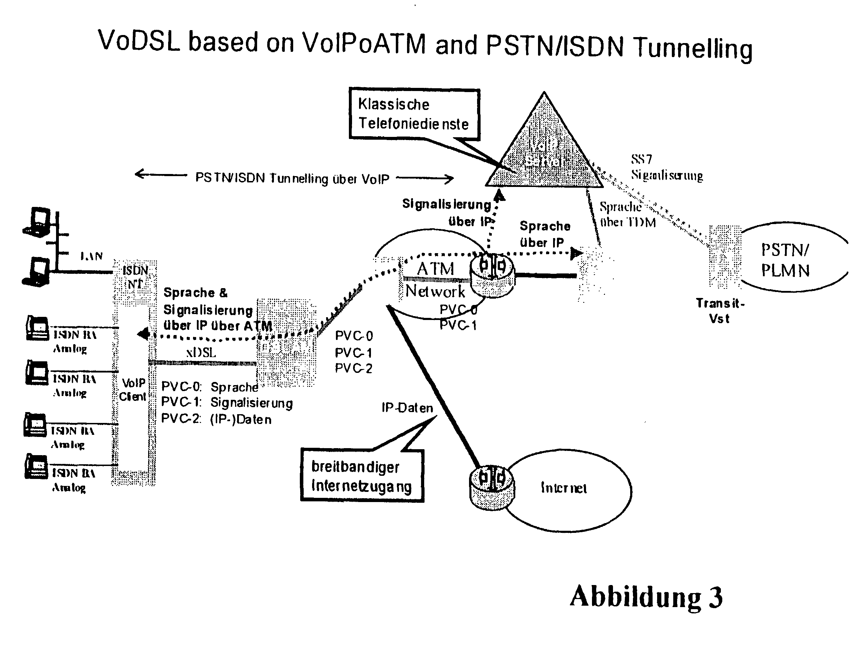

Das erfindungsgemässe Verfahren ist im Abbildung 3 dargestellt. Das erfindungsgemäße Verfahren verbindet die Vorteile der bekannten Lösungsverfahren unter Vermeidung der spezifischen Nachteile. Es kann in Kombination mit beliebigen DSLAMs, welche zur Bereitstellung des xDSL-Zuganges benötigt werden, eingesetzt werden und hat keinen Einfluß auf den breitbandigen Internetzugang des Telefonkunden.

Das erfindungsgemäße Verfahren verwendet einen VoIP Server, der die klassischen Teilnehmer Leistungsmerkmale einer LE zur Verfügung stellt und einen VoIP Client im IAD. Der VoIP Server verwendet ein bekanntes VoIP Signalisierungsprotokoll (H.323, SIP, etc.) zur Steuerung der VoIP Sprachübertragung zwischen VoIP Client im IAD und MG und zum Tunneling der PSTN/ISDN Signallisierung zwischen VoIP Client im IAD und VoIP Server. Der VoIP Client Im IAD setzt die VoIP-Sprache und über das VoIP Signalisierungsprotokoll getunnelte PSTN/ISDN Siganlisierung auf die klassischen Sprachübertragungs- und Signalisierungsverfahren am Teilnehmeranschluss des IADs (ISDN, Analog) um.
Das erfindungsgemäße Verfahren zur Bereitstellung klassicher Telefoniedienste über VoIP über xDSL Anschlussleitungen zeichnet sich im Einzelnen durch folgende Elemente aus:
1. Der Verwendung von zwei dedizierten ATM Verbindungen (PVC oder SVC) für a) den Sprachkanal und b) die Signalisierung. Damit wird zum einen die für Telefoniedienste benötigte QoS sichergestellt und zum anderen können Sprache und Signalisierung zu unterschiedlichen Netzelementen geführt werden
2. Der Verwendung einer VoIP Signalisierung (H.323, SIP, etc.) zur Steuerung der Sprachübertragung zwischen IAD und MG einerseits und zur transparenten Übertragung der PSTN/ISDN Signalisierung (Tunneling) zwischen IAD und VoIP Controller
3. Der Verwendung eines MGs zur Umsetzung der Sprache zwischen VoIP und TDM. Dieses MG wird vom VoIP Controller gesteuert. Hinsichtlich Beschaltung des TDM-Ausgang des MG sind zwei Konfigurationen möglich.
   3a Der TDM-Ausgang des MGs wird zum VoIP Controller geführt. Bei dieser Konfiguration wird der TDM-Bearer vom VoIP Controller bearbeitet. Diese Lösung hat den Vorteil, dass ein einfaches (Trunking-)MG verwendet werden kann, welches nur die Umsetzung der Sprache zwischen VoIP und TDM, aber keine speziellen Funktionen zur Unterstützung von Tln-Diensten, beherrschen muss.
   3b Der TDM-Ausgang des MGs wird direkt zur übergeordneten Vermittlungsstelle geführt. Bei dieser Konfiguration wird der TDM-Bearer vom VoIP Controller nicht direkt bearbeitet. Damit muss das MG, nebst der Umsetzung der Sprache zwischen VoIP und TDM, auch Funktionen zur Unterstützung von Tln-Diensten beherrschen. Diese sind u.a. DTMF Erkennung, Einspeisung von Tönen und Ansagen, Unterstützung von Mehrkanalverbindungen. Bei dieser Konfiguration ist auch die Komplexität des MG-Steuerprotokoll entsprechend grösser
   4. Der Verwendung eines VoIP Controllers, welcher a) die Teilnehmerdaten (Rufnummer, Dienste, etc..) enthält b) die PSTN/ISDN Signalisierung abwickelt, c) die Vergebührungsdaten erfasst, d) das VoIP Signalisierungsprotokoll abschliesst und zum Tunneling der PSTN/ISDN Signalisierung verwendet, e) das MG steuert und ggf. f) den TDM-Sprachkanal bearbeitet.
   5. Der Verwendung eines, im IAD integrierten, VoIP Clients, welcher a) die beiden ATM-Verbindungen (SVC oder PVC) für Sprache und Signalisierung abschliesst, b) die Sprachübertragung zwischen VoIP und dem Endgeräteanschluss (ISDN oder Analog) umsetzt, c) das VoIP Signalisierungsprotokoll abschliesst und zum Tunneling der PSTN/ISDN Signalisierung verwendet und d) Sprache und PSTN/ISDN Signalisierung zusammenführt und damit den Endgeräteanschluss für ISDN bzw. Analogen Teilnehmerendgeäte am IAD bedient.

### 4. Worin liegen Besonderheiten der Erfindung ?

Verfahren zur Bereitstellung von Telefoniediensten über VoIP über xDSL-Anschlussleitungen welches sich auszeichnet durch:
- QoS für Telefoniedienste durch Separierung von Sprache und Signalisierung dank dedizierter ATM-Verbindungen (PVC oder SVC) für die Sprachübertragung (VoIPoATM) und Signalisierung (H.323, SIP, etc.) zwischen IAD und VoIP-Controller bzw. Media Gateway
- VoIP Controller und entsprechender VoIP Client im IAD zum Tunneling der PSTN/ISDN Signalisierung mittels VoIP Signalisierung (H.323, SIP, etc.) und Steuerung der Sprachübertragung über VoIP.
- Verwendung eines einfachen (Trunking-)MGs, gesteuert vom VoIP Controller, zur Umsetzung des Nutzkanals zwischen VoIP (zum Transport über ATM und xDSL) und TDM (zur Verarbeitung im VoIP Controller und Anschluss an klassischen Vermittlungsstellen)

### Verwendete Abkürzungen:

- AN:: Access Network
- DSL:: Digital Subscriber Line
- DSLAM:: DSL Access Modul
- FR:: Frame Relay
- IAD: Integrated Access Device
- IP:: Internet Protokolle
- LE, Tl-Vst:: Teilnehmer-Vermittlungstelle (Local Exchange)
- MG:: Media Gateway
- PVC:: Permanent Virtual Connection
- SVC:: Switched Virtual Circuit
- VST, Vst:: Vermittlungstelle
- VoIP:: Voice over IP

## Patentansprüche

1. Verfahren zur Bereitstellung von Telefoniediensten über xDSL Anschlussleitungen, demgemäß
- zur Durchführung eines Telefoniedienstes eine Transportprotokoll-Verbindung für den Sprachkanal zwischen einer xDSL-Zugangseinrichtung (IAD) und einem Media Gateway (MG) und eine weitere Transportprotokoll-Verbindung für die Signalisierung der xDSL-Zugangseinrichtung (IAD) und einem VoIP-Controller verwendet werden,
- für die Steuerung der Sprachübertragung zwischen der xDSL-Zugangseinrichtung (IAD) und dem Media Gateway (MG) einerseits und die Steuerung der transparenten Übertragung der PSTN/ISDN-Signalisierung zwischen der xDSL-Zugangseinrichtung (IAD) und dem VoIP-Controller andererseits eine VoIP-Signalisierung verwendet wird,
- das Media-Gateway (MG) zur Umsetzung der Sprache zwischen VoIP-Protokoll und TDM-Protokoll verwendet wird,
- durch den VoIP Controller a) die PSTN/ISDN Signalisierung abgewickelt wird, b) das VoIP-Signalisierungsprotokoll abgeschlossen und zum Tunneling der PSTN/ISDN Signalisierung verwendet wird, c) das Media-Gateway (MG) gesteuert wird,
- durch die xDSL-Zugangseinrichtung (IAD) a) die beiden genannten Transportprotokoll-Verbindungen für Sprache und Signalisierung abgeschlossen werden, b) die Sprachübertragung zwischen VoIP und dem Endgeräteanschluss umgesetzt wird, c) das VoIP Signalisierungsprotokoll abgeschlossen und zum Tunneling der PSTN/ISDN Signalisierung verwendet wird und d) Sprache und PSTN/ISDN Signalisierung zusammengeführt wird und damit der Endgeräteanschluss für die an der xDSL-Zugangseinrichtung (IAD) angeschlossenen Teilnehmerendgeäte bedient wird.

2. Telefoniedienst-System, mit
einem VoIP-Server, der die Bereitstellung von Telefoniediensten über xDSL-Anschlussleitungen steuert, indem er ein bekanntes VoIP-Signalisierungsprotokoll (H.323, SIP, etc.) einerseits zur Steuerung der VoIP-Sprachübertragung zwischen einer xDSL-Zugangseinrichtung (IAD) und einem Media-Gateway (MG) und andererseits zum Tunneling der PSTN/ISDN Signalisierung zwischen sich und der xDSL-Zugangseinrichtung (IAD) verwendet, wobei
- die genannte xDSL-Zugangseinrichtung (IAD) mindestens einen Teilnehmeranschluß beinhaltet und die VoIP-Sprache und die über das VoIP-Signalisierungsprotokoll getunnelte PSTN/ISDN-Signalisierung auf die klassischen Sprachübertragungs- und Signalisierungsverfahren an einem Teilnehmeranschluss umsetzt,
- das genannte Media-Gateway (MG) die Sprache zwischen VoIP und TDM umsetzt,
- eine Transportprotokoll-Verbindung für den Sprachkanal zwischen der xDSL-Zugangseinrichtung (IAD) und dem Media Gateway (MG) und eine weitere Transportprotokoll-Verbindung für die Signalisierung zwischen der xDSL-Zugangseinrichtung (IAD) und dem VoIP-Controller verwendet wird.

3. VoIP-Server, mit Mitteln derart ausgestaltet daß er die Bereitstellung von Telefoniediensten über xDSL Anschlussleitungen steuert, indem er ein bekanntes VoIP-Signalisierungsprotokoll einerseits zur Steuerung der VoIP-Sprachübertragung zwischen einer xDSL-Zugangseinrichtung (IAD) und einem Media-Gateway (MG) und andererseits zum Tunneling der PSTN/ISDN Signallisierung zwischen sich und der xDSL-Zugangseinrichtung (IAD) verwendet, wobei das genannte Tunneling über eine dezidierte Transportprotokoll-Verbindung erfolgt.

4. xDSL-Zugangseinrichtung (IAD), mit Mitteln die
- zum einen eine Transportprotokoll-Verbindung für Sprache zu einem Media Gateway (MG) und zum anderen eine Transportprotokoll-Verbindung für die Signalisierung zu einem VoIP-Controller abschliessen,
- die Sprachübertragung zwischen VoIP und dem Endgeräteanschluss umsetzen,
- das VoIP-Signalisierungsprotokoll abschliessen und zum Tunneling der PSTN/ISDN Signalisierung zu dem VoIP-Controller verwenden,
- Sprache und PSTN/ISDN Signalisierung zusammenführen und damit den Endgeräteanschluss für Teilnehmerendgeäte bedienen.

## Claims

1. Method for providing telephone services over xDSL access lines, wherein
- a transport protocol connection for the voice channel between an xDSL access device (IAD) and a media gateway (MG), and another transport protocol connection for the signalling between the xDSL access device (IAD) and a VoIP controller, are used to implement a telephone service,
- VoIP signalling is used for controlling voice transmission between the xDSL access device (IAD) and the media gateway (MG) on the one hand, and controlling the transparent transmission of the PSTN/ISDN signalling between the xDSL access device (IAD) and the VoIP controller on the other,
- the media gateway (MG) is used for converting voice between VoIP protocol and TDM protocol,
- by the VoIP controller: a) the PSTN/ISDN signalling is handled, b) the VoIP signalling protocol is terminated and used for tunnelling of the PSTN/ISDN signalling, c) the media gateway (MG) is controlled,
- by the xDSL access equipment (IAD): a) the two said transport protocol connections for voice and signalling are terminated, b) voice transmission is converted between VoIP and the terminal access, c) the VoIP signalling protocol is terminated and used for tunnelling of the PSTN/ISDN signalling, and d) voice and PSTN/ISDN signalling are combined and therefore terminal access for the subscriber terminal equipment connected to the xDSL access device (IAD) is supported.

2. Telephone service system, having
a VoIP server which controls the provision of telephony services via xDSL lines by using a known VoIP signalling protocol (H.323, SIP, etc.)
on the one hand for controlling VoIP voice transmission between an xDSL access device (IAD) and a media gateway (MG) and, on the other hand, for tunnelling of the PSTN/ISDN signalling between itself and the xDSL access device (IAD), wherein
- said xDSL access device (IAD) contains at least one subscriber access and the VoIP voice and the PSTN/ISDN signalling tunnelled via the VoIP signalling protocol is converted to the conventional voice transmission and signalling method on a subscriber line,
- said media gateway (MG) converts voice between VoIP and TDM,
- a transport protocol connection is used for the voice channel between the xDSL access device (IAD) and the media gateway (MG), and another transport protocol connection is used for the signalling between the xDSL access device (IAD) and the VoIP controller.

3. VoIP server equipped with such means that it controls the provision of telephony services via xDSL lines by using a known VoIP signalling protocol, on the one hand for controlling VoIP voice transmission between an xDSL access device (IAD) and a media gateway (MG) and, on the other hand, for tunnelling of the PSTN/ISDN signalling between itself and the xDSL access device (IAD), said tunnelling taking place via a dedicated transport protocol connection.

4. xDSL access equipment (IAD) with means of
- terminating on the one hand the transport protocol connection for voice to a media gateway (MG) and, on the other, a transport protocol connection for signalling to a VoIP controller,
- converting voice transmission between VoIP and the terminal access,
- terminating the VoIP signalling protocol and using it for tunnelling of the PSTN/ISDN signalling to the VoIP controller,
- combining voice and PSTN/ISDN signalling and therefore supporting terminal access for subscriber terminal equipment.

## Revendications

1. Procédé de mise à disposition de services de téléphonie via des lignes d'abonné xDSL, selon lequel
- une connexion de protocole de transport est utilisée pour le canal de conversation entre un dispositif d'accès xDSL (IAD) et une passerelle média (MG) et une autre connexion de protocole de transport est utilisée pour la signalisation du dispositif d'accès xDSL (IAD) et un contrôleur VoIP, pour réaliser un service de téléphonie,
- une signalisation VoIP est utilisée pour la commande de la transmission vocale entre le dispositif d'accès xDSL (IAD) et la passerelle média (MG), d'une part, et pour la commande de la transmission transparente de la signalisation PSTN/ISDN entre le dispositif d'accès xDSL (IAD) et le contrôleur VoIP, d'autre part,
- la passerelle média (MG) est utilisée pour la conversion de la parole entre le protocole VoIP et le protocole TDM,
- par l'intermédiaire du contrôleur VoIP, a) la signalisation PSTN/ISDN est exécutée, b) le protocole de signalisation VoIP est terminé et utilisé pour la transmission tunnel de la signalisation PSTN/ISDN, c) la passerelle média (MG) est commandée,
- par l'intermédiaire du dispositif d'accès xDSL (IAD), a) les deux connexions mentionnées pour le protocole de transport pour la parole et la signalisation sont terminées, b) la transmission vocale entre VoIP et la connexion du terminal est convertie, c) le protocole de signalisation VoIP est terminé et utilisé pour la transmission tunnel de la signalisation PSTN/ISDN et d) la parole et la signalisation PSTN/ISDN sont regroupées et la connexion du terminal en est servie pour les terminaux d'abonné raccordés au dispositif d'accès xDSL (IAD).

2. Système de services de téléphonie, comprenant
- un serveur VoIP qui commande la mise à disposition de services de téléphonie via les lignes d'abonné xDSL, du fait qu'il utilise un protocole de signalisation VoIP connu (H.323, SIP, etc.), d'une part, pour la commande de la transmission vocale VoIP entre un dispositif d'accès xDSL (IAD) et une passerelle média (MG) et, d'autre part, pour la transmission tunnel de la signalisation PSTN/ISDN entre lui et le dispositif d'accès xDSL (IAD),
- ledit dispositif d'accès xDSL (IAD) comprenant au moins un raccordement d'abonné et convertissant la parole VoIP et la signalisation PSTN/ISDN transmise en tunnel par l'intermédiaire du protocole de signalisation VoIP en des procédés de transmission vocale et de signalisation classiques sur un raccordement d'abonné,
- ladite passerelle média (MG) convertissant la parole entre VoIP et TDM,
- une connexion de protocole de transport étant utilisée pour le canal de conversation entre le dispositif d'accès xDSL (IAD) et la passerelle média (MG), et une autre connexion de protocole de transport étant utilisée pour la signalisation entre le dispositif d'accès xDSL (IAD) et le contrôleur VoIP.

3. Serveur VoIP équipé de moyens, de telle manière qu'il commande la mise à disposition de services de téléphonie via des lignes d'abonné xDSL, du fait qu'il utilise un protocole de signalisation VoIP connu, d'une part, pour la commande de la transmission vocale VoIP entre un dispositif d'accès xDSL (IAD) et une passerelle média (MG) et, d'autre part, pour la transmission tunnel de la signalisation PSTN/ISDN entre lui et le dispositif d'accès xDSL (IAD), ladite transmission tunnel étant réalisée par l'intermédiaire d'une connexion de protocole de transport dédiée.

4. Dispositif d'accès xDSL (IAD) comprenant des moyens qui,
- d'une part, terminent une connexion de protocole de transport pour la parole vers une passerelle média (MG) et, d'autre part, terminent une connexion de protocole de transport pour la signalisation vers un contrôleur VoIP,
- qui convertissent la transmission vocale entre VoIP et la connexion du terminal,
- qui terminent le protocole de signalisation VoIP et l'utilisent pour la transmission tunnel de la signalisation PSTN/ISDN vers le contrôleur VoIP,
- qui regroupent la parole et la signalisation PSTN/ISDN et en servent la connexion du terminal pour les terminaux d'abonné.
